# FASCICULE DE BREVET EUROPEEN

(11) **EP 3 043 166 B1**
(45) Date de publication et mention de la délivrance du brevet: **07.11.2018**
(21) Numéro de dépôt: 16150203.4
(22) Date de dépôt: 05.01.2016
(51) Int. Cl.: G01N 21/3504, G01N 21/31, G02B 5/18

(54) **DISPOSITIF OPTIQUE DE FOCALISATION**
OPTISCHE FOKALISIERUNGSVORRICHTUNG
OPTICAL FOCUSING DEVICE

(30) Priorité: 06.01.2015 FR 1550058
(43) Date de publication de la demande: 13.07.2016
(73) Titulaire: Commissariat à l'Energie Atomique et aux Energies Alternatives, 75015 Paris (FR)
(72) Inventeur: LEFEBVRE, Anthony, 38170 SEYSSINET-PARISET (FR); BOUTAMI, Salim, 38100 GRENOBLE (FR)
(74) Mandataire: Cabinet Beaumont

(56) Documents cités:
- WO-A1-2013/049942
- US-A1- 2003 035 215
- US-A1- 2007 164 221
- US-A1- 2013 058 370

## Description

### Domaine

La présente demande concerne un dispositif optique de focalisation du type à réflexion, et vise plus particulièrement un tel dispositif dont les propriétés de focalisation et de réflexion sont obtenues au moyen d'un réseau résonant.

### Exposé de l'art antérieur

Il a déjà été proposé, notamment dans l'article intitulé "Planar high-numerical-aperture low-loss focusing reflectors and lenses using subwavelength high contrast gratings" de Fanglu Lu et al. (07 June 2010 / Vol.18, N°12/OPTICS EXPRESS 12606), dont le contenu est considéré comme faisant partie intégrante de la présente description, un dispositif planaire de focalisation en réflexion, comportant un réseau résonant non périodique.

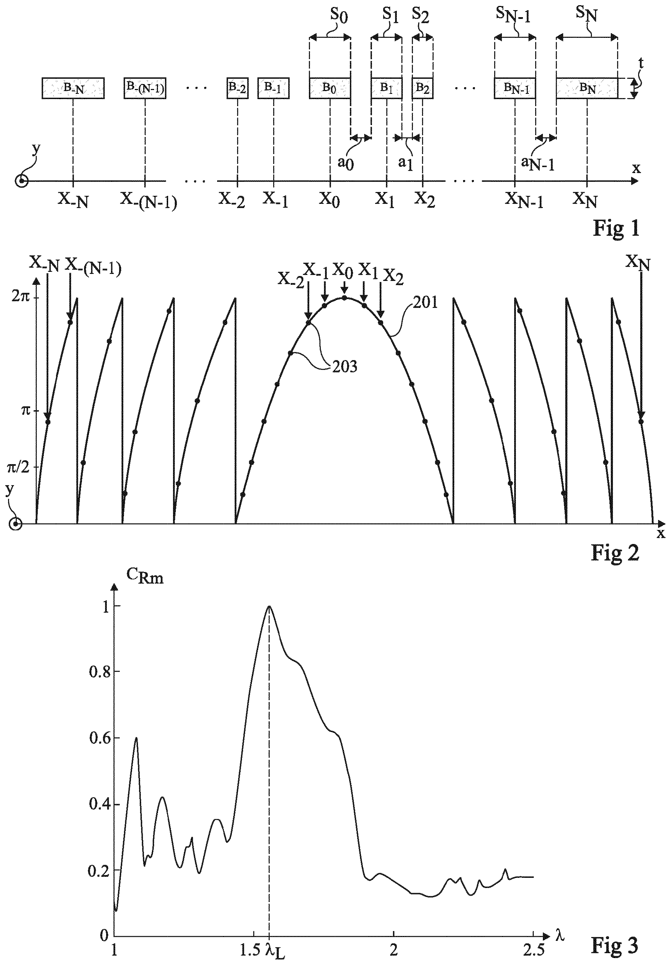

Les figures 1 et 2 illustrent schématiquement le fonctionnement d'un tel dispositif. Plus particulièrement, la figure 1 est une vue en coupe transversale schématique d'un tel dispositif, et la figure 2 est un diagramme représentant le déphasage subi par la lumière réfléchie en différents points de ce dispositif.

Le dispositif de la figure 1 comprend un réseau comportant 2N+1 barres parallèles B-_{N}, B-_{(N-1)}, ..., B-₂, B-₁, B₀, B₁, B₂, ... B_{N-1}, B_{N}, avec N entier positif. Les barres Bᵢ (avec i entier allant de -N à N) sont en un matériau présentant un indice de réfraction relativement élevé, par exemple de l'AlGaAs ou du silicium, et sont séparées deux à deux par une région d'un matériau d'indice de réfraction relativement faible, par exemple de l'air ou de l'oxyde de silicium. Le réseau du dispositif de la figure 1 est non périodique, c'est-à-dire que des barres Bᵢ distinctes présentent des largeurs Sᵢ distinctes (selon une direction x du plan moyen du réseau transversale aux barres Bᵢ), et que l'espacement aᵢ (selon la direction x) entre deux barres voisines Bᵢ et Bᵢ₊₁ n'est pas le même pour toutes les barres du réseau. Les différentes barres Bᵢ ont en revanche toutes la même épaisseur t, et ont leurs faces supérieures et inférieures alignées respectivement selon un plan horizontal supérieur définissant une face supérieure du réseau, et selon un plan horizontal inférieur définissant une face inférieure du réseau.

La courbe 201 de la figure 2, en trait plein, représente la distribution spatiale, selon la direction x, du déphasage que devrait idéalement générer, en réflexion, le dispositif de la figure 1, à une longueur d'onde d'éclairement λ_{L} particulière, pour obtenir des propriétés de focalisation désirées à cette longueur d'onde λ_{L}. On notera que dans cet exemple, le dispositif de focalisation est monodirectionnel (1D), c'est-à-dire que la lumière incidente, après réflexion sur la face supérieure ou inférieure du réseau, est focalisée selon une ligne parallèle au plan moyen du réseau et orthogonale à la direction x. En d'autres termes, le déphasage généré par le réseau est constant selon une direction y parallèle au plan moyen du réseau et orthogonale à la direction x. Dans l'exemple représenté, pour un faisceau incident parallèle de lumière cohérente orthogonal au plan moyen du réseau, la ligne de focalisation coïncide, en projection verticale, avec la direction longitudinale centrale de la barre B₀.

Les largeurs Sᵢ des barres Bᵢ et les distances aᵢ séparant les barres Bᵢ sont choisies de façon que, à la longueur d'onde λ_{L}, le réseau présente un coefficient de réflexion relativement élevé en tout point de sa surface, et produise un déphasage dont la distribution spatiale selon la direction x s'approche autant que possible de la distribution idéale représentée par la courbe 201. Les points 203 de la figure 2 représentent le déphasage généré par le réseau de la figure 1 en 2N+1 points de coordonnées respectives X-_{N}, X-_{(N-1)}, ... , X-₂, X-₁, X₀, X₁, X₂, ... X_{N-1} et X_{N} selon la direction x, correspondant respectivement aux centres des 2N+1 barres Bᵢ du réseau. Les largeurs Sᵢ et les espacements aᵢ des barres sont choisis de façon que les points 203 soient situés sensiblement sur la courbe de distribution idéale 201. En d'autres termes, pour chaque barre Bᵢ du réseau, un couple de valeurs Sᵢ, aᵢ est choisi pour produire un déphasage particulier, et l'association des 2N+1 barres Bᵢ en un réseau non périodique revient à approximer la distribution de déphasage idéale de la courbe 201 par une distribution de déphasage discrète représentée par les points 203. Comme cela est expliqué en section 3 de l'article susmentionné de Fanglu Lu et al., le choix des largeurs Sᵢ et des espacements aᵢ permettant d'obtenir à la fois un fort coefficient de réflectivité (pour limiter les pertes) et les valeurs de déphasage souhaitées, peut aisément être réalisé en utilisant des outils standards de simulation du comportement de réseaux résonants périodiques. Il est en effet admis que l'extrapolation, à un réseau non périodique, du comportement attendu pour un réseau périodique, constitue une approximation satisfaisante, notamment lorsque les variations de dimensions entre deux barres voisines du réseau sont relativement faibles, typiquement de l'ordre de 0 à 15 %.

Bien que présentant de bonnes performances à la longueur d'onde d'éclairement λ_{L} pour laquelle ils ont été conçus, les dispositifs de focalisation en réflexion du type décrit ci-dessus présentent toutefois des inconvénients.

### Résumé

Un objet d'un mode de réalisation est de prévoir un dispositif de focalisation en réflexion à réseau résonant, ce dispositif palliant tout ou partie des inconvénients des dispositifs connus.

Ainsi, un mode de réalisation prévoit un dispositif optique de focalisation en réflexion, comportant un réseau comprenant une alternance de premières et deuxièmes régions d'indices de réfraction distincts, ce réseau comportant plusieurs sous-réseaux comportant chacun plusieurs premières régions alignées selon un plan parallèle au plan moyen du réseau, ledit dispositif comportant des structurations telles que, pour un faisceau incident collimaté de lumière cohérente orthogonal au plan moyen du réseau, les rayons du faisceau parviennent avec un déphasage non nul sur des sous-réseaux distincts du dispositif.

Selon un mode de réalisation, les structurations sont des structurations d'un élément de support du réseau, et sont telles que des sous-réseaux distincts sont décalés d'une distance non nulle selon une direction orthogonale au plan moyen du réseau.

Selon un mode de réalisation, tous les sous-réseaux sont alignés horizontalement, et le réseau est revêtu d'une couche comportant, du côté de sa face opposée au réseau, des structurations en paliers horizontaux telles que des sous-réseaux distincts du dispositif soient revêtus par des portions d'épaisseurs distinctes de ladite couche.

Selon un mode de réalisation, le réseau présente une épaisseur constante sur toute sa surface.

Selon un mode de réalisation, le réseau est non périodique.

Selon un mode de réalisation, les premières régions présentent des largeurs et espacements variables selon au moins une direction du plan moyen du réseau.

Selon un mode de réalisation, les largeurs et espacements des premières régions, et les hauteurs desdites structurations, sont choisis de façon à obtenir, pour une longueur d'onde prédéterminée d'éclairement du réseau, un coefficient de réflexion supérieur à un seuil en tout point du réseau, et une distribution spatiale de déphasage prédéterminée selon ladite au moins une direction.

Selon un mode de réalisation, les premières régions sont des barres parallèles à section carrée ou rectangulaire.

Selon un mode de réalisation, les premières régions sont des plots carrés.

Selon un mode de réalisation, les premières régions sont des anneaux concentriques.

Selon un mode de réalisation, le réseau est un réseau monomode, c'est-à-dire qu'il ne comporte qu'une seule fréquence de résonance.

Un autre mode de réalisation prévoit un détecteur de gaz comportant : une source lumineuse adaptée à émettre un faisceau lumineux dans une gamme de longueurs d'ondes incluant une première longueur d'onde correspondant à une longueur d'onde d'absorption du gaz à détecter et une deuxième longueur d'onde correspondant à une longueur d'onde de référence non absorbée par le gaz à détecter ; et en regard de la source, un assemblage de premier et deuxième dispositifs de focalisation en réflexion du type susmentionné, le premier dispositif étant adapté à réfléchir et focaliser la lumière dans une première bande de longueurs d'ondes centrée sur la première longueur d'onde, et étant sensiblement transparent en dehors de cette première bande, et le deuxième dispositif étant adapté à réfléchir et focaliser la lumière dans une deuxième bande de longueurs d'ondes située hors de la première bande et centrée sur la deuxième longueur d'onde, et étant sensiblement transparent en dehors de cette deuxième bande.

Selon un mode de réalisation, le détecteur comporte en outre un premier capteur photosensible disposé de façon à recevoir uniquement la lumière réfléchie par le premier dispositif, et un deuxième capteur photosensible disposé de façon à recevoir uniquement la lumière réfléchie par le deuxième dispositif.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe représentant de façon schématique un exemple d'un dispositif de focalisation en réflexion ;
la figure 2, précédemment décrite, est un diagramme représentant de façon schématique la distribution spatiale du déphasage généré par le dispositif de la figure 1 ;
la figure 3 est un diagramme illustrant un inconvénient du dispositif de focalisation en réflexion décrit en relation avec les figures 1 et 2 ;
la figure 4 est une vue en coupe représentant de façon schématique un exemple d'un mode de réalisation d'un dispositif de focalisation en réflexion ;
la figure 5 est un diagramme représentant de façon schématique la distribution spatiale du déphasage généré par le dispositif de la figure 4 ;
la figure 6 est une vue en coupe schématique et partielle représentant un agrandissement d'une portion du dispositif de la figure 4 ;
la figure 7 est un diagramme illustrant schématiquement le comportement en longueur d'onde du dispositif de la figure 4 ;
la figure 8 est une vue en coupe représentant de façon schématique une variante de réalisation du dispositif de focalisation en réflexion de la figure 4 ;
la figure 9 est une vue de dessus représentant de façon schématique une variante de réalisation bidimensionnelle d'un dispositif de focalisation en réflexion ;
la figure 10 est une vue de dessus représentant de façon schématique une autre variante de réalisation bidimensionnelle d'un dispositif de focalisation en réflexion ; et
la figure 11 est une vue en coupe représentant de façon schématique un exemple d'un mode de réalisation d'un détecteur de gaz utilisant un dispositif de focalisation en réflexion du type décrit en relation avec les figures 4 à 10.

### Description détaillée

Par souci de clarté, de mêmes éléments ont été désignés par de mêmes références aux différentes figures et, de plus, les diverses figures ne sont pas tracées à l'échelle. Par ailleurs, dans la présente description, sauf indication contraire, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., ces références s'appliquent à des dispositifs orientés de la façon illustrée dans les vues correspondantes, étant entendu que, dans la pratique, ces dispositifs peuvent être orientés différemment. En outre, sauf précision contraire, les expressions "approximativement", "sensiblement", et "de l'ordre de" signifient à 10 % près, de préférence à 5 % près.

Les inventeurs ont constaté que les dispositifs de focalisation en réflexion du type décrit dans l'article susmentionné de Fanglu Lu et al. souffrent d'un défaut de sélectivité spectrale, c'est-à-dire qu'ils réfléchissent et focalisent non seulement les rayons à la longueur d'onde λ_{L} pour laquelle ils ont été conçus, mais aussi dans une gamme de longueurs d'ondes relativement large autour de la longueur d'onde λ_{L}. Ce phénomène est illustré par la figure 3.

La figure 3 est un diagramme représentant l'évolution, en fonction de la longueur d'onde d'éclairement λ, du coefficient de réflexion moyen C_{Rm} de l'ensemble du réseau d'un dispositif du type décrit en relation avec les figures 1 et 2 (ou moyenne des coefficients de réflexion des différents points du réseau). Comme cela apparaît sur la figure 3, le coefficient de réflexion moyen C_{Rm} présente un pic maximum à la longueur d'onde λ_{L} pour laquelle le dispositif a été conçu (1,55 µm dans l'exemple représenté). Toutefois, on observe que la bande passante du dispositif est relativement large, c'est-à-dire que le coefficient de réflexion moyen C_{Rm} reste relativement élevé dans une gamme de longueurs d'ondes relativement large de part et d'autre de la longueur d'onde λ_{L}. En outre, même loin de la longueur d'onde de résonance (λ<1.4 µm et λ>1.8 µm), le coefficient de réflexion est de l'ordre de 0,2, ce qui témoigne d'une mauvaise réjection aux longueurs d'ondes correspondantes.

Cette faible sélectivité spectrale peut poser problème dans certaines applications. Ainsi, il serait souhaitable de pouvoir disposer d'un dispositif optique de focalisation en réflexion présentant une meilleure sélectivité spectrale que les dispositifs connus, c'est-à-dire un dispositif adapté à réfléchir et focaliser la lumière incidente dans une gamme de longueurs d'ondes étroite prédéterminée, ce dispositif étant sensiblement transparent pour le reste du spectre électromagnétique.

Les inventeurs ont identifié que les réseaux non-périodiques utilisés dans les dispositifs du type décrit dans l'article susmentionné de Fanglu Lu et al. sont des réseaux multimodes, c'est-à-dire qu'ils présentent plusieurs fréquences de résonance, ce qui explique au moins en partie leur faible sélectivité spectrale. L'utilisation d'un réseau présentant un nombre de modes de résonance restreint, par exemple un réseau monomode ou un réseau bimode, pourrait permettre d'améliorer la sélectivité spectrale du dispositif.

Toutefois, en pratique, on constate que si l'on diminue le nombre de modes de résonance du réseau, on diminue en conséquence l'amplitude de la plage de déphasages que peut générer le réseau avec un coefficient de réflectivité satisfaisant. Plus particulièrement, avec un réseau monomode ou bimode, l'amplitude de la plage de déphasages que peut générer le réseau avec un coefficient de réflectivité satisfaisant est généralement inférieure à 2π (c'est-à-dire une période complète de l'onde électromagnétique incidente), ce qui limite les possibilités de focalisation de la lumière par le dispositif. A titre d'exemple illustratif, si on considère un régime monomode, on peut montrer analytiquement, par la théorie des modes couplés, que quels que soient la fréquence de résonance du réseau et le facteur de qualité du réseau, une variation de phase Δϕ (+/- Δϕ/2 autour de la résonance) ne peut être obtenue qu'au prix d'une baisse du coefficient de réflectivité de cos²(Δϕ/2). Ainsi, si on s'interdit de faire descendre le coefficient de réflectivité en dessous de 0,5, l'amplitude de la gamme de déphasages pouvant être obtenue est de π/2 (de -π/4 à π/4). Certaines distributions spatiales de déphasage, et par conséquent certaines propriétés de focalisation, ne peuvent alors pas être obtenues. Notamment, un profil de distribution spatiale de déphasage du type représenté en figure 2, comprenant des déphasages allant de 0 à 2π, ne peut alors plus être obtenu.

Selon un aspect d'un mode de réalisation, on prévoit un dispositif optique de focalisation en réflexion comportant un réseau résonant comprenant une alternance de régions d'indices de réfraction distincts, ce dispositif comportant des structurations permettant d'ajouter, dans certaines portions du réseau, un déphasage constant permettant de couvrir l'étendue de déphasage de 2π nécessaire à la réalisation de certaines fonctions optiques.

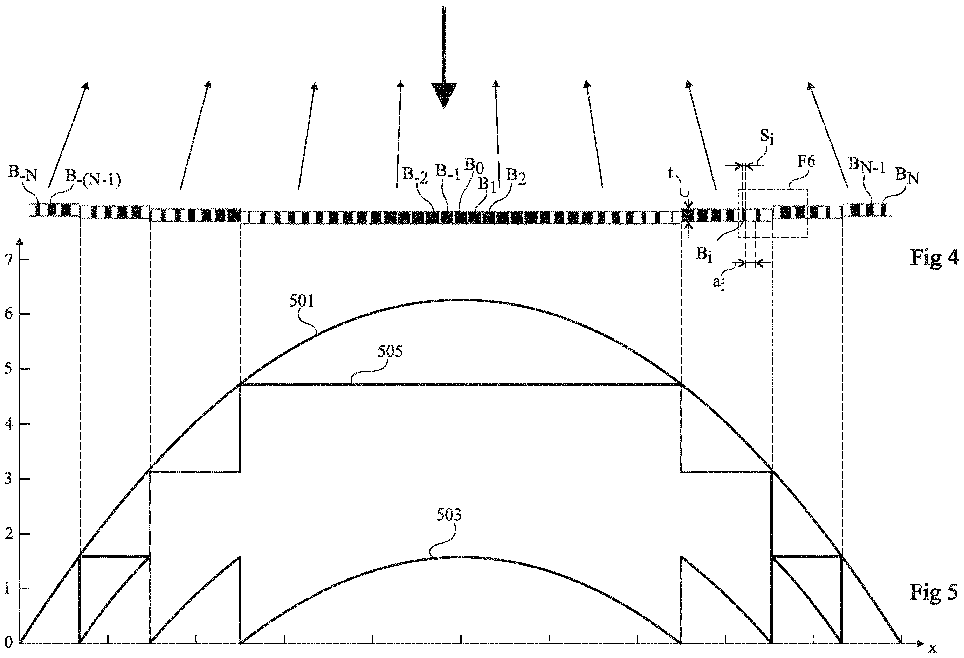

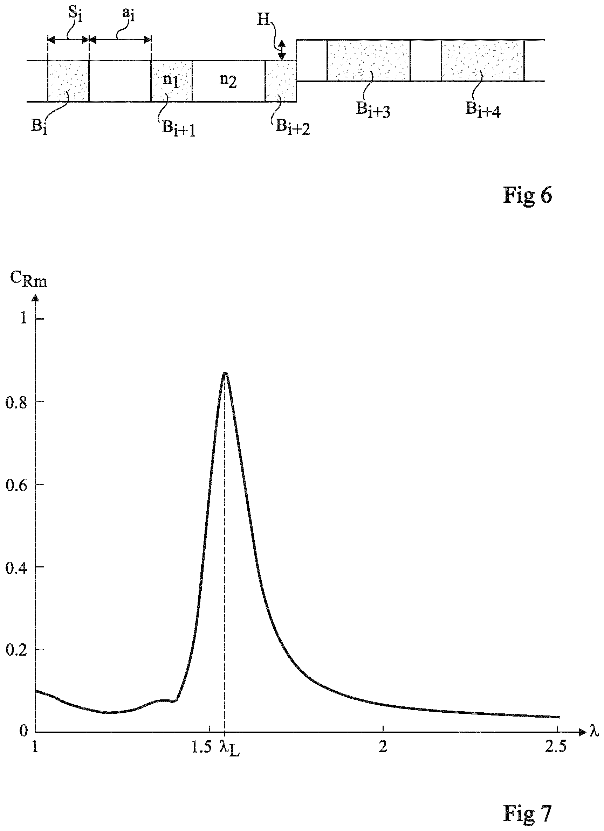

Les figures 4 et 6 représentent de façon schématique un exemple d'un mode de réalisation d'un dispositif de focalisation en réflexion. La figure 4 est une vue en coupe transversale du dispositif, et la figure 6 est un agrandissement d'une portion de la figure 4, délimitée par le cadre F6 de la figure 4.

Dans cet exemple, le dispositif de focalisation est, comme dans l'exemple de la figure 1, un dispositif de focalisation monodirectionnel (1D).

Le dispositif des figures 4 et 6 comprend un réseau résonant non périodique comportant une pluralité de régions Bᵢ en un matériau d'un premier indice de réfraction n₁, par exemple en AlGaAs ou en silicium, séparées deux à deux par des régions en un matériau d'un deuxième indice de réfraction n₂ inférieur au premier indice, par exemple de l'air ou de l'oxyde de silicium. Dans cet exemple, les régions Bᵢ ont la forme de barres parallèles à section carrée ou rectangulaire. Dans l'exemple représenté, le réseau comporte 2N+1 barres parallèles B-_{N}, B-_{(N-1)}, ..., B-₂, B-₁, B₀, B₁, B₂, ... B_{N-1}, B_{N}, avec N entier positif, et est symétrique par rapport à l'axe longitudinal central de la barre B₀. Les modes de réalisation décrits ne se limitent toutefois pas à ce cas particulier.

Les barres Bᵢ peuvent être entièrement entourées par le matériau de séparation des barres. A titre d'exemple, les barres Bᵢ peuvent être entièrement noyées dans une matrice d'oxyde de silicium comportant une face supérieure sensiblement plane, définissant une face d'éclairement du dispositif (dans ce cas une couche antireflet peut être prévue à l'interface air/oxyde de silicium), ou être suspendues de façon à être entièrement entourées d'air. Les modes de réalisation décrits ne se limitent toutefois pas à ces exemples particuliers. A titre de variante, les barres Bᵢ peuvent être disposées sur un support d'oxyde de silicium, et être séparées deux à deux latéralement et surmontées par de l'air ou par un autre matériau.

Comme dans l'exemple de la figure 1, des barres Bᵢ distinctes du réseau présentent des largeurs Sᵢ distinctes selon une direction x du plan moyen du réseau orthogonale aux barres Bᵢ. De plus, comme dans l'exemple de la figure 1 l'espacement aᵢ (selon la direction x) entre deux barres consécutives Bᵢ et Bᵢ₊₁ n'est pas le même pour toutes les barres du réseau. A titre d'exemple, le pas du réseau, c'est-à-dire la distance centre à centre entre deux barres consécutives Bᵢ et Bᵢ₊₁ du réseau, est constant, et le facteur de remplissage du réseau par les barres Bᵢ est variable selon la direction x. A titre de variante, le pas du réseau est variable selon la direction x. En tout état de cause, pour obtenir des propriétés résonantes du réseau, le pas maximal du réseau est inférieur à la longueur d'onde λ_{L} à laquelle le réseau est destiné à être éclairé, par exemple comprise entre 0,3 et 30 µm. A titre d'exemple, le pas maximal du réseau est compris entre λ_{L}/2 et λ_{L}. De préférence, le pas maximal du réseau est inférieur à λ_{L}/(1+sin (θᵢ)), où θᵢ est l'angle d'incidence sous lequel le réseau est destiné à être éclairé. On notera que dans la présente demande, la valeur λ_{L} désigne la longueur d'onde de la lumière d'éclairement dans le milieu incident, c'est-à-dire dans le milieu traversé par la lumière incidente avant d'atteindre le réseau (qui peut être de l'air, de la silice, ou un autre matériau transparent). Dans l'exemple représenté, les barres Bᵢ ont toutes la même épaisseur ou sensiblement la même épaisseur t, de préférence inférieure à la longueur d'onde λ_{L}, par exemple comprise entre λ_{L}/20 et λ_{L}.

Le dispositif de la figure 4 diffère du dispositif de la figure 1 en ce que, dans l'exemple de la figure 4, les barres Bᵢ du réseau ne sont pas toutes alignées horizontalement. Plus particulièrement, dans le dispositif de la figure 4, le réseau est divisé en plusieurs sous-réseaux comportant chacun plusieurs barres Bᵢ consécutives. Les barres Bᵢ d'un même sous-réseau sont alignées horizontalement ou coplanaires. Par coplanaires on entend ici que les barres Bᵢ d'un même sous-réseau ont leurs faces supérieures disposées dans un même premier plan parallèle au plan moyen du réseau (qui est un plan horizontal dans l'orientation de la figure 4), et ont leurs faces inférieures disposées dans un même deuxième plan parallèle au plan moyen du réseau. Dans le dispositif de la figure 4, les barres Bᵢ de sous-réseaux voisins sont décalées verticalement d'une distance H non nulle, de préférence inférieure à la longueur d'onde λ_{L}. En d'autres termes, le réseau du dispositif des figures 4 et 6 a une épaisseur t constante selon la direction x, mais présente, selon la direction x, un profil en forme de marches ou paliers horizontaux, chaque marche ou palier correspondant à un sous-réseau du dispositif. A titre d'exemple, le dispositif des figures 4 et 6 comporte un élément de support (non représenté) du réseau, comportant des structurations telles que des sous-réseaux distincts sont décalés verticalement, chaque sous-réseau étant sensiblement horizontal.

Un décalage vertical H entre deux sous-réseaux distincts du dispositif a pour effet que, pour un faisceau incident parallèle de lumière cohérente orthogonal au plan moyen du réseau, les rayons du faisceau parviennent sur les deux sous-réseaux avec un déphasage égal à 2πH/λ_{L}. Ainsi, pour un dispositif fonctionnant en réflexion, le déphasage lié au décalage vertical H entre deux sous-réseaux distincts est égal à 4πH/λ_{L}. On notera qu'en pratique, le faisceau incident n'est pas nécessairement collimaté et/ou perpendiculaire au plan moyen du réseau. A titre d'exemples, le faisceau incident peut être convergent, divergent, incliné par rapport au plan moyen du réseau, etc.

Un avantage du mode de réalisation de la figure 4 est que la combinaison du déphasage lié aux structurations verticales du réseau, et du déphasage lié aux largeurs Sᵢ et espacements aᵢ des barres Bᵢ du réseau, permet de reconstruire des profils de déphasage présentant une amplitude supérieure à celle qui peut être obtenue en faisant varier uniquement les largeurs Sᵢ et espacements aᵢ des barres Bᵢ. En particulier, le mode de réalisation de la figure 4 permet d'obtenir un profil de déphasage d'amplitude égale à 2π, même lorsque l'amplitude de la gamme de déphasage pouvant être atteinte en faisant varier les largeurs Sᵢ et espacements aᵢ des barres Bᵢ est inférieure à 2π.

Le nombre d'étages du réseau du dispositif des figures 4 et 6, ainsi que les hauteurs H séparant des sous-réseaux voisins du dispositif, peuvent être choisis librement en fonction des propriétés de focalisation visées, et du déphasage maximal qui peut être obtenu par la seule modification des paramètres Sᵢ et aᵢ du réseau. De préférence, chaque sous-réseau comprend au moins 5 barres Bᵢ, de façon à préserver l'effet réseau.

Dans un mode de réalisation préféré, mais non limitatif, la hauteur H entre deux sous-réseaux voisins du dispositif, ou hauteur d'un étage, est la même pour tous les sous-réseaux du dispositif. Le nombre d'étages du dispositif est alors de préférence égal à l'entier positif supérieur ou égal à 2π/Δϕ, où Δϕ est le déphasage maximal qui peut être atteint par la seule modification des paramètres Sᵢ et aᵢ du réseau. Généralement, on observe que pour conserver un niveau de réflectivité satisfaisant, par exemple supérieur à 0,5, Δϕ est approximativement égal à nb_{modes}*π/2, où nb_{modes} désigne le nombre de modes de résonance du réseau. Dans l'exemple représenté, le dispositif comprend 4 étages séparés deux à deux par une même hauteur H = λ_{L}/8, où λ_{L} est la longueur d'onde à laquelle le réseau est destiné à être éclairé, ce qui se traduit par un déphasage en réflexion (aller-retour) d'environ π/2 entre deux étages successifs.

Bien que l'on ait représenté sur les figures 4 et 6 un exemple de réalisation dans lequel chaque marche du réseau est formée à l'interface entre une barre Bᵢ et le matériau séparant latéralement les barres Bᵢ, les modes de réalisation décrits ne se limitent pas à ce cas particulier. A titre de variante, les marches du réseau peuvent être formées à une distance intermédiaire (selon la direction x) entre deux barres Bᵢ voisines, par exemple à mi-distance entre deux barres Bi voisines, ou dans une barre Bᵢ (qui s'étend alors sur deux étages).

La figure 5 est un diagramme représentant de façon schématique la distribution spatiale du déphasage généré par le dispositif des figures 4 et 6. Plus particulièrement, la courbe 501 de la figure 5 représente la distribution spatiale, selon la direction x, du déphasage que devrait idéalement générer en réflexion le dispositif des figures 4 et 6 à la longueur d'onde λ_{L} à laquelle le réseau est destiné à être éclairé, pour obtenir des propriétés de focalisation désirées à cette longueur d'onde. Dans cet exemple, l'amplitude de la plage des déphasages à réaliser est de 2π, et l'amplitude des déphasages qui peuvent être réalisés en jouant sur les paramètres Sᵢ et aᵢ du réseau est de π/2. L'étagement du réseau est prévu pour, dans chaque sous-réseau, ajouter au déphasage du réseau un déphasage constant choisi parmi quatre niveaux de déphasages, respectivement 0, π/2, π, et 3π/2. La distribution spatiale des déphasages à générer peut être divisée en deux contributions, la première, illustrée par la courbe 503 de la figure 5, venant des variations des paramètres Sᵢ et aᵢ du réseau selon la direction x, et la seconde, illustrée par la courbe 505 de la figure 5, venant de la structuration en étages du réseau. En combinant ces deux effets, on retrouve le profil de déphasages souhaité, illustré par la courbe 501. Les largeurs Sᵢ et espacements aᵢ des barres Bᵢ sont choisis de façon similaire à ce qui a été décrit en relation avec la figure 2, de sorte que, à la longueur d'onde λ_{L}, et en l'absence des structurations verticales en étages, le réseau présente un coefficient de réflexion relativement élevé en tout point de sa surface, et produise un déphasage dont la distribution spatiale approxime la distribution idéale représentée par la courbe 503.

Avantageusement, le réseau du dispositif des figures 4 et 6 présente un nombre de modes de résonance restreint, par exemple un seul mode ou deux modes de résonance, ce qui permet d'obtenir un dispositif de focalisation en réflexion présentant une sélectivité spectrale plus importante qu'avec les dispositifs connus, comme l'illustre la figure 7, qui sera décrite plus en détail ci-après.

La réalisation d'un réseau comportant un nombre de modes de résonance restreint, par exemple un réseau monomode, est à la portée de l'homme du métier, et ne sera pas décrite en détail. A titre d'exemple, on peut d'abord réaliser une cartographie représentative de l'évolution, en fonction de la largeur Sᵢ et de l'espacement aᵢ des barres, du coefficient de réflexion et du déphasage générés par un réseau du type considéré. Un exemple d'une telle cartographie est notamment représenté en figure 2 de l'article susmentionné de Fanglu Lu et al. A partir de cette cartographie, un chemin de points de coordonnées (Sᵢ, aᵢ) peut être choisi pour obtenir la réflectivité et la distribution de déphasages souhaitée. Pour réaliser un réseau monomode le chemin choisi suit de préférence un profil de réflectivité continu, c'est-à-dire notamment que, contrairement à ce qui a été représenté en figure 2 de l'article susmentionné, il reste au voisinage d'une même courbe continue de forte réflectivité, intersectant cette courbe de façon à obtenir les déphasages souhaités en minimisant les variations de réflectivité.

A titre d'exemple non limitatif, pour favoriser l'obtention d'un réseau à forte sélectivité spectrale, le réseau peut présenter les caractéristiques suivantes : un pas supérieur à 0,8*λ_{L}, ce qui revient à se placer juste en dessous de la limite de la diffraction ; et/ou un facteur de remplissage du réseau par les barres Bᵢ inférieur à 0,2 ou supérieur à 0,8, c'est-à-dire un réseau relativement fin de façon à éviter des dégénérescence de modes (susceptibles de se produire pour des facteurs de remplissages voisins de 0,5) ; et/ou une épaisseur t des barres Bᵢ inférieure à λ_{L}/2, de façon à limiter à un le nombre de modes supportés verticalement. Les modes de réalisation décrits ne se limitent toutefois pas à ces exemples particuliers de paramètres dimensionnels du réseau.

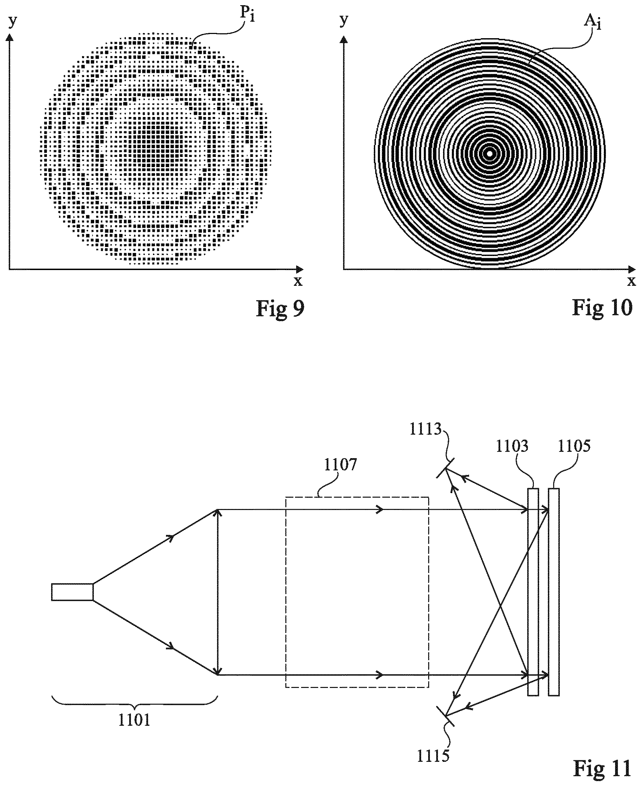

La figure 7 est un diagramme représentant l'évolution, en fonction de la longueur d'onde d'éclairement λ du réseau, du coefficient de réflexion moyen C_{Rm} de l'ensemble du réseau d'un dispositif du type décrit en relation avec les figures 4 et 6 (ou moyenne des coefficients de réflexion des différents points du réseau). Plus particulièrement, on se place ici dans le cas d'un dispositif conçu pour une longueur d'onde d'éclairement λ_{L} = 1,55 µm, présentant une largeur de 1 mm et une distance focale de 2,5 cm, et dans lequel le réseau est monomode. Comme cela apparaît sur la figure 7, le coefficient de réflexion moyen C_{Rm} présente un pic maximum à la longueur d'onde λ_{L}. De plus, on observe sur la figure 7 que, par rapport à l'exemple de la figure 3, la sélectivité spectrale du dispositif est élevée, c'est-à-dire que le dispositif réfléchit et focalise uniquement la lumière située dans une gamme de longueur d'ondes étroite centrée sur la longueur d'onde λ_{L}, par exemple une plage de largeur inférieure à 250 nm incluant la longueur d'onde λ_{L}, et est transparent ou quasiment transparent (coefficient de réflexion inférieur à 0,2) en dehors de cette plage. Un tel dispositif forme ainsi un trieur spectral ou réflecteur chromatique planaire particulièrement compact, pouvant avoir des applications dans de nombreux domaines (imagerie, capteurs, mise en forme de faisceaux, etc.). Un exemple non limitatif d'application d'un tel dispositif à un capteur de gaz sera décrit ci-après en relation avec la figure 11.

Les modes de réalisation décrits ne se limitent toutefois pas au cas où le réseau utilisé comprend un nombre de modes de résonance restreint. Plus généralement, un avantage du mode de réalisation des figures 4 et 6 est qu'il offre, par rapport aux dispositifs connus du type décrit dans l'article de Fanglu Lu et al., un paramètre supplémentaire de réglage du déphasage, pour parvenir à la distribution de déphasages souhaitée. A titre d'exemple, même lorsqu'une forte sélectivité spectrale n'est pas requise et que le réseau présente un nombre de modes de résonance relativement important, par exemple supérieur ou égal à quatre, qui permettrait de couvrir une gamme de déphasages de 2π avec un bon coefficient de réflectivité, un étagement du réseau peut être réalisé, par exemple en vue de relaxer les contraintes sur le choix des couples de valeurs Sᵢ, aᵢ, par exemple en vue de faciliter la fabrication du réseau, ou en vue de maitriser l'indice moyen du réseau.

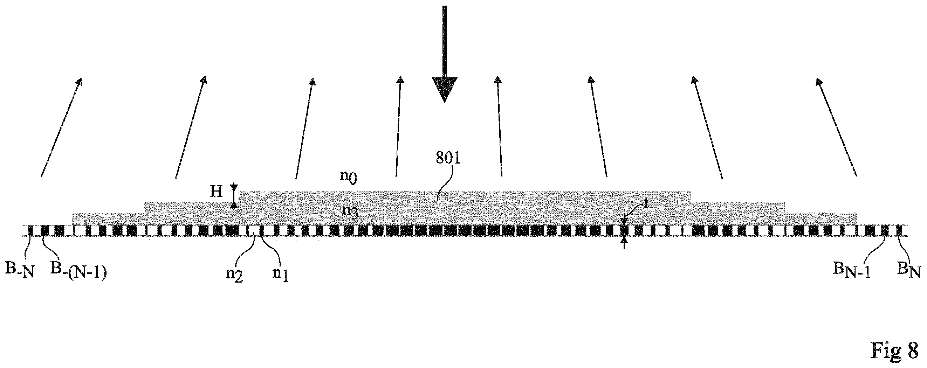

La figure 8 est une vue en coupe transversale représentant de façon schématique une variante de réalisation du dispositif des figures 4 et 6. Le dispositif de la figure 8 présente des points communs avec le dispositif des figures 4 et 6. Dans la suite, seules les différences entre le dispositif de la figure 8 et le dispositif des figures 4 et 6 seront soulignées.

Le dispositif de la figure 8 diffère du dispositif des figures 4 et 6 en ce que, dans le dispositif de la figure 8, le réseau formé par les barres Bᵢ n'est pas structuré en lui-même. En d'autres termes, dans l'exemple de la figure 8, toutes les barres Bᵢ du réseau sont alignées horizontalement ou coplanaires.

Dans le dispositif de la figure 8, le réseau est revêtu, du côté de sa face supérieure, d'une couche 801 d'un matériau d'indice de réfraction n₃, différent de l'indice n₀ du milieu incident dans lequel se propage la lumière avant d'atteindre la face supérieure du dispositif. A titre d'exemple non limitatif, l'indice n₃ peut être identique à l'indice n₂ du matériau séparant latéralement les barres Bᵢ. De préférence, une couche antireflet, non représentée, revêt la surface supérieure de la couche 801, à l'interface entre les milieux d'indices n₀ et n₃.

La couche 801 comporte, du côté de sa face supérieure, des structurations définissant, selon la direction x, des marches ou paliers horizontaux. Ainsi, des portions distinctes du réseau, correspondant aux sous-réseaux de l'exemple des figures 4 à 6, sont surmontées par des épaisseurs distinctes de la couche 801.

La différence d'épaisseur H entre deux marches d'épaisseurs distinctes de la couche 801 a pour effet d'introduire un déphasage constant entre les deux sous-réseaux sous-jacents correspondants.

Ainsi, de façon similaire à ce qui a été décrit en relation avec les figures 4 à 6, la combinaison du déphasage lié aux structurations verticales du dispositif (i.e. les structurations de la couche 801 dans cet exemple) et du déphasage lié aux paramètres Sᵢ et aᵢ du réseau, permet de reconstruire des profils de déphasage présentant une amplitude supérieure à celle qui peut être obtenue en faisant varier uniquement les paramètres Sᵢ et aᵢ.

On notera que dans les exemples décrits en relation avec les figures 4 à 8, le réseau du dispositif est constitué par des barres parallèles Bᵢ d'indice de réfraction n₁, séparées latéralement par un matériau d'indice n₂. Pour un bon fonctionnement du dispositif, la lumière incidente doit de préférence être polarisée selon une direction rectiligne parallèle aux barres Bᵢ. A titre de variante, chaque barre Bᵢ peut être divisée en plots rectangulaires régulièrement espacés selon la direction y du dispositif, de façon que le dispositif soit compatible avec de la lumière polarisée orthogonalement aux barres Bᵢ.

Par ailleurs, bien que l'on ait détaillé ci-dessus uniquement des exemples de réalisation de dispositifs de focalisation monodirectionnels (1D), les modes de réalisation décrits peuvent être adaptés à des dispositifs de focalisation bidirectionnels, c'est-à-dire adaptés à focaliser la lumière réfléchie en un point.

Les figures 9 et 10 sont des vues de dessus représentant de façon schématique deux variantes de réalisation bidimensionnelles d'un dispositif de focalisation en réflexion du type décrit en relation avec les figures 4 à 8.

Dans l'exemple de la figure 9, le réseau est constitué de plots carrés Pᵢ d'indice de réfraction n1, séparés deux à deux par un matériau d'indice n2, les largeurs et espacements des plots variant selon des directions orthogonales x et y du plan moyen du dispositif. Comme dans les exemples des figures 4 à 8, le dispositif peut être divisé en sous-réseaux comportant chacun plusieurs plots Pᵢ voisins, et comporter des structurations (non visibles sur la figure 9) telles que, pour un faisceau incident collimaté de lumière cohérente orthogonal au plan moyen du réseau, les rayons du faisceau parviennent avec un déphasage non nul sur des sous-réseaux distincts du dispositif. Le dispositif de la figure 9 est adapté à fonctionner avec de la lumière polarisée rectilignement, quelle que soit la direction de polarisation.

Dans l'exemple de la figure 10, le réseau est constitué d'anneaux concentriques Aᵢ d'indice de réfraction n1, séparés deux à deux par un matériau d'indice n2, les largeurs et espacements des anneaux variant selon une direction radiale. Comme dans les exemples des figures 4 à 8, le dispositif peut être divisé en sous-réseaux comportant chacun plusieurs anneaux Aᵢ, et comporter des structurations (non visibles sur la figure 10) telles que, pour un faisceau incident parallèle de lumière cohérente orthogonal au plan moyen du réseau, les rayons du faisceau parviennent avec un déphasage non nul sur des sous-réseaux distincts du dispositif. Le dispositif de la figure 10 est adapté à fonctionner avec de la lumière présentant une polarisation radiale ou azimutale.

La figure 11 illustre schématiquement un exemple d'application d'un dispositif de focalisation en réflexion chromatique du type décrit en relation avec les figures 4 à 10, à un détecteur optique de gaz. On s'intéresse ici plus particulièrement à un détecteur optique qui détecte la présence et éventuellement mesure la teneur d'un gaz, par exemple du CO₂ ou du CO, dans une atmosphère, en mesurant l'absorption d'un faisceau lumineux à une longueur d'onde correspondant à une raie d'absorption du gaz considéré.

Le détecteur de la figure 11 comprend une source lumineuse 1101, par exemple une source infra-rouge, adaptée à émettre un faisceau lumineux collimaté dans une gamme de longueurs d'ondes relativement large incluant la longueur d'onde λₘ d'une raie d'absorption caractéristique du gaz à détecter.

Le détecteur de la figure 11 comprend en outre des premier et second dispositifs de focalisation en réflexion chromatiques 1103 et 1105, du type décrit en relation avec les figures 4 à 10. Dans cet exemple, les dispositifs 1103 et 1105 sont disposés en regard l'un de l'autre, dans des plans parallèles sensiblement orthogonaux au faisceau émis par la source 1101. Dans l'exemple représenté, le dispositif 1103 est en amont du dispositif 1105, c'est-à-dire que, après avoir traversé une portion 1107 de l'atmosphère susceptible de contenir le gaz à détecter, le faisceau émis par la source 1101 atteint d'abord le dispositif 1103, puis la portion du faisceau transmise par le dispositif 1103 atteint le dispositif 1105.

Le dispositif 1103 est adapté à réfléchir et focaliser la lumière dans une bande de longueurs d'ondes étroite centrée sur la longueur d'onde de mesure λₘ, et est sensiblement transparent en dehors de cette bande. Le dispositif 1105 est quant à lui adapté à réfléchir et focaliser la lumière dans une bande de longueurs d'ondes étroite centrée sur une longueur d'onde de référence λᵣ, hors de la bande dans laquelle le dispositif 1103 est réfléchissant et ne correspondant pas à une longueur d'onde d'absorption du gaz à détecter, et est sensiblement transparent en dehors de cette bande de référence.

Pour éviter une superposition des images réfléchies par les dispositifs 1103 et 1105, les dispositifs 1103 et 1105 sont adaptés à focaliser la lumière réfléchie selon des axes distincts, différents de l'axe du faisceau incident provenant de la source 1101.

Le détecteur de la figure 11 comprend en outre un premier capteur photosensible 1113 disposé de façon à ne recevoir que la lumière réfléchie par le dispositif 1103, et un second capteur photosensible 1115 disposé de façon à ne recevoir que la lumière réfléchie par le dispositif 1105.

En d'autres termes, le dispositif 1103 se comporte comme un miroir focalisant dont le foyer serait centré sur le capteur 1113, et dont l'axe serait parallèle au faisceau collimaté incident, et le dispositif 1105 se comporte comme un miroir focalisant dont le foyer serait centré sur le capteur 1115, et dont l'axe serait parallèle au faisceau collimaté incident.

En comparant les intensités des signaux lumineux reçus par les capteurs 1113 et 1115, il est possible de détecter la présence, et éventuellement de mesurer la teneur du gaz à détecter.

Un avantage d'un tel détecteur de gaz est qu'il permet de se passer des filtres classiquement disposés devant les capteurs photosensibles des détecteurs de gaz connus, ce qui permet notamment d'améliorer le rendement lumineux par rapport aux capteurs connus.

On notera que dans l'exemple de la figure 11, la lumière transmise par le dispositif 1103 peut subir un déphasage lié au réseau et aux structurations du dispositif 1103. Lors de la conception du dispositif 1105, il convient de tenir compte de ce déphasage pour définir la distribution spatiale de déphasages qui doit être générée par le dispositif 1105.

De préférence, la distance entre les dispositifs 1103 et 1105 est relativement faible, par exemple inférieure à deux fois la longueur d'onde moyenne d'éclairement, de façon à pouvoir considérer que la propagation du faisceau transmis par le dispositif 1103 est sensiblement orthogonale au dispositif 1105.

Diverses variantes de réalisation du détecteur de gaz de la figure 11 peuvent être prévues. En particulier, les positions des dispositifs 1103 et 1105 peuvent être inversées.

Des modes de réalisation particuliers ont été décrits. Diverses variantes et modifications apparaîtront à l'homme de l'art. En particulier, les modes de réalisation décrits ne se limitent pas à l'exemple particulier d'application à un détecteur de gaz des dispositifs de focalisation en réflexion du type décrit en relation avec les figures 4 à 10.

A titre d'exemple, de tels dispositifs peuvent être utilisés dans le domaine des cellules photovoltaïques à jonctions multiples. Classiquement, de telles cellules comportent plusieurs jonctions PN empilées réalisées avec des matériaux semiconducteurs différents, sensibles à des longueurs d'ondes d'éclairement différentes. L'utilisation d'un trieur spectral à base de dispositifs de focalisation en réflexion chromatiques du type décrit en relation avec les figures 4 à 10, peut avantageusement permettre, au lieu d'empiler les différentes jonctions, de juxtaposer ces jonctions les unes à côté des autres, facilitant ainsi la fabrication de la cellule. Un tel trieur spectral réflectif peut notamment être utilisé pour distribuer les différentes longueurs d'ondes du rayonnement solaire vers les jonctions les plus appropriées.

## Revendications

1. Dispositif optique de focalisation en réflexion, comportant un réseau comprenant une alternance de premières (Bᵢ ; Pᵢ ; Aᵢ) et deuxièmes régions d'indices de réfraction (n1, n2) distincts, ce réseau comportant plusieurs sous-réseaux comportant chacun plusieurs premières (Bᵢ ; Pᵢ ; Aᵢ) et deuxièmes régions coplanaires alignées selon un plan parallèle au plan moyen du réseau, ledit dispositif comportant des structurations telles que, pour un faisceau incident collimaté de lumière cohérente orthogonal au plan moyen du réseau, les rayons du faisceau parviennent avec un déphasage non nul sur des sous-réseaux distincts du dispositif.

2. Dispositif selon la revendication 1, dans lequel les structurations sont des structurations d'un élément de support du réseau, et sont telles que des sous-réseaux distincts sont décalés d'une distance (H) non nulle selon une direction orthogonale au plan moyen du réseau.

3. Dispositif selon la revendication 1, dans lequel tous les sous-réseaux sont alignés horizontalement, et dans lequel le réseau est revêtu d'une couche (801) comportant, du côté de sa face opposée au réseau, des structurations en paliers horizontaux telles que des sous-réseaux distincts du dispositif soient revêtus par des portions d'épaisseurs distinctes de ladite couche.

4. Dispositif selon l'une quelconque des revendications 1 à 3, dans lequel le réseau présente une épaisseur (t) constante sur toute sa surface.

5. Dispositif selon l'une quelconque des revendications 1 à 4, dans lequel le réseau est non périodique.

6. Dispositif selon l'une quelconque des revendications 1 à 5, dans lequel les premières régions (Bᵢ ; Pᵢ ; Aᵢ) présentent des largeurs (Sᵢ) et espacements (aᵢ) variables selon au moins une direction (x ; y) du plan moyen du réseau.

7. Dispositif selon la revendication 6, dans lequel les largeurs (Sᵢ) et espacements (aᵢ) des premières régions (Bᵢ, Pᵢ, Aᵢ), et les hauteurs (H) desdites structurations, sont choisis de façon à obtenir, pour une longueur d'onde prédéterminée λ_{L} d'éclairement du réseau, un coefficient de réflexion supérieur à 0,5 en tout point du réseau, et une distribution spatiale de déphasage prédéterminée selon ladite au moins une direction (x ; y).

8. Dispositif selon la revendication 7, dans lequel le pas maximal du réseau est inférieur à ladite longueur d'onde λ_{L} d'éclairement du réseau.

9. Dispositif selon la revendication 7 ou 8, dans lequel le pas maximal du réseau est inférieur à λ_{L}/(1+sin(θᵢ)), où θᵢ est l'angle d'incidence sous lequel le réseau est destiné à être éclairé.

10. Dispositif selon l'une quelconque des revendications 7 à 9, dans lequel les largeurs (Sᵢ) et espacements (aᵢ) des premières régions (Bᵢ, Pᵢ, Aᵢ), et les hauteurs (H) desdites structurations, sont choisis de façon à obtenir, en dehors d'une bande de longueur d'onde de largeur inférieure à 250 nm incluant ladite longueur d'onde λ_{L} d'éclairement du réseau, un coefficient de réflexion inférieur à 0,2 en tout point du réseau.

11. Dispositif selon l'une quelconque des revendications 1 à 10, dans lequel lesdites premières régions (Aᵢ ; Pᵢ ; Bᵢ) sont :
des barres parallèles à section carrée ou rectangulaire ; ou
des plots carrés ; ou
des anneaux concentriques.

12. Dispositif selon l'une quelconque des revendications 1 à 11, dans lequel ledit réseau est un réseau monomode, c'est-à-dire qu'il ne comporte qu'une seule fréquence de résonance.

13. Détecteur de gaz comportant :
une source lumineuse (1101) adaptée à émettre un faisceau lumineux dans une gamme de longueurs d'ondes incluant une première longueur d'onde (λₘ) correspondant à une longueur d'onde d'absorption du gaz à détecter et une deuxième longueur d'onde (λᵣ) correspondant à une longueur d'onde de référence non absorbée par le gaz à détecter ; et
en regard de la source, un assemblage de premier (1103) et deuxième (1105) dispositifs de focalisation en réflexion selon l'une quelconque des revendications 1 à 12, le premier dispositif (1103) étant adapté à réfléchir et focaliser la lumière dans une première bande de longueurs d'ondes centrée sur ladite première longueur d'onde (λₘ), et étant sensiblement transparent en dehors de cette première bande, et le deuxième dispositif (1105) étant adapté à réfléchir et focaliser la lumière dans une deuxième bande de longueurs d'ondes située hors de la première bande et centrée sur ladite deuxième longueur d'onde (λᵣ), et étant sensiblement transparent en dehors de cette deuxième bande.

14. Détecteur de gaz selon la revendication 13, comportant en outre un premier capteur photosensible (1113) disposé de façon à recevoir uniquement la lumière réfléchie par le premier dispositif (1103), et un deuxième capteur photosensible (1115) disposé de façon à recevoir uniquement la lumière réfléchie par le deuxième dispositif (1105).

## Patentansprüche

1. Optische Reflexionsfokussiervorrichtung, die ein Gitter aufweist, das eine Alternation von ersten (Bᵢ; Pᵢ; Aᵢ) und zweiten Bereichen mit unterschiedlichen Brechungsindizes (n1, n2) aufweist, wobei das Gitter eine Vielzahl von Sub-Gittern aufweist, die jeweils eine Vielzahl von ersten (Bᵢ; Pᵢ; Aᵢ) und zweiten koplanaren Bereichen aufweisen, die entlang einer Ebene parallel zu der mittleren Ebene des Gitters ausgerichtet sind, wobei die Vorrichtung solche Strukturen aufweist, dass für einen kollimierten einfallenden kohärenten Lichtstrahl orthogonal zu der mittleren Ebene des Gitters, die Strahlen des Strahls unterschiedliche Sub-Gitter der Vorrichtung mit einer Nicht-Null-Phasenverschiebung erreichen.

2. Vorrichtung nach Anspruch 1, wobei die Strukturen Strukturen eines Tragelements des Gitters sind, und so sind, dass unterschiedliche Sub-Gitter durch einen Nicht-Null-Abstand (H) entlang einer Richtung orthogonal zu der mittleren Ebene des Gitters versetzt sind.

3. Vorrichtung nach Anspruch 1, wobei alle der Sub-Gitter horizontal ausgerichtet sind, und wobei das Gitter mit einer Schicht (801) beschichtet ist, die an der zu dem Gitter entgegengesetzten Seite ihrer Oberfläche Strukturen mit horizontalen Stufen aufweist, so dass unterschiedliche Sub-Gitter der Vorrichtung mit Teilen von unterschiedlicher Dicke der Schicht beschichtet sind.

4. Vorrichtung nach einem der Ansprüche 1 bis 3, wobei das Gitter über seine gesamte Oberfläche eine konstante Dicke (t) aufweist.

5. Vorrichtung nach einem der Ansprüche 1 bis 4, wobei das Gitter nichtperiodisch ist.

6. Vorrichtung nach einem der Ansprüche 1 bis 5, wobei die ersten Bereiche (Bᵢ; Pᵢ; Aᵢ) variable Breiten (Sᵢ) und Abstände (aᵢ) entlang wenigstens einer Richtung (x; y) der mittleren Ebene des Gitters aufweisen.

7. Vorrichtung nach Anspruch 6, wobei die Breiten (Sᵢ) und die Abstände (aᵢ) der ersten Bereiche (Bᵢ; Pᵢ; Aᵢ) und die Höhen (H) der Strukturen ausgewählt sind zum Erhalten, für eine vorbestimmte Gitterbeleuchtungswellenlänge λ_{L}, eines Reflexionskoeffizienten größer als 0,5 an jedem Punkt des Gitters und einer vorbestimmten räumlichen Phasenverschiebungsverteilung entlang wenigstens einer Richtung (x; y).

8. Vorrichtung nach Anspruch 7, wobei der maximale Abstand des Gitters kleiner als die Beleuchtungswellenlänge λ_{L} des Gitters ist.

9. Vorrichtung nach Anspruch 7 oder 8, wobei der maximale Abstand des Gitter kleiner als λ_{L}/(1+sin (θᵢ)) ist, wobei θᵢ der Einfallswinkel ist, unter welchem das Gitter beleuchtet werden soll.

10. Vorrichtung nach einem der Ansprüche 7 bis 9, wobei die Breiten (Sᵢ) und Abstände (aᵢ) der ersten Bereiche (Bᵢ; Pᵢ; Aᵢ) und die Höhen (H) der Strukturen ausgewählt sind zum Erhalten, außerhalb eines Wellenlängenbandes mit einer Breite kleiner als 250 nm einschließlich der Beleuchtungswellenlänge λ_{L} des Gitters, eines Reflexionskoeffizienten kleiner als 0,2 an jedem Punkt des Gitters.

11. Vorrichtung nach einem der Ansprüche 1 bis 10, wobei die ersten Bereiche (Aᵢ; Pᵢ; Bᵢ) sind:
parallele Stäbe mit einem quadratischen oder rechteckigen Querschnitt; oder
quadratische Pads; oder
konzentrische Ringe.

12. Vorrichtung nach einem der Ansprüche 1 bis 11, wobei das Gitter ein Monomodus-Gitter ist, das heißt, es weist eine einzige Resonanzfrequenz auf.

13. Ein Gasdetektor, der Folgendes aufweist:
Eine Lichtquelle (1101), die geeignet ist zum Emittieren eines Lichtstrahls in einem Wellenlängenbereich einschließlich einer ersten Wellenlänge (λₘ), die einer Absorptionswellenlänge des zu detektierenden Gases entspricht, und
einer zweiten Wellenlänge (λᵣ), die einer Referenzwellenlänge entspricht, welche nicht von dem zu detektierenden Gas absorbiert wird; und
gegenüberliegend zur Quelle, eine Anordnung von ersten (1103) und zweiten (1105) Reflexionsfokussiervorrichtungen nach einem der Ansprüche 1 bis 12, wobei die erste Vorrichtung (1103) geeignet ist zum Reflektieren und Fokussieren von Licht in einem ersten Wellenlängenband, das an der ersten Wellenlänge (λₘ) zentriert ist, und die außerhalb ihres ersten Bandes im Wesentlichen transparent ist, und wobei die zweite Vorrichtung (1105) geeignet ist zum Reflektieren und Fokussieren von Licht in einem zweiten Wellenlängenband, das außerhalb des ersten Bandes liegt und auf der zweiten Wellenlänge (λᵣ) zentriert ist, und die die außerhalb des zweiten Bandes im Wesentlichen transparent ist.

14. Gasdetektor nach Anspruch 13, der ferner einen ersten photoempfindlichen Sensor (1113) aufweist, der angeordnet ist, um nur das von der ersten Vorrichtung (1103) reflektierte Licht zu empfangen, und einen zweiten photoempfindlichen Sensor (1115), der angeordnet ist, um nur das von der zweiten Vorrichtung (1105) reflektierte Licht zu empfangen.

## Claims

1. An optical reflection focusing device, comprising a grating comprising an alternation of first (Bᵢ; Pᵢ; Aᵢ) and second regions having different refraction indexes (n1, n2), the grating comprising a plurality of sub-gratings each comprising a plurality of first (Bᵢ; Pᵢ; Aᵢ) and second coplanar regions aligned along a plane parallel to the mean plane of the grating, said device comprising structures such that, for a collimated incident coherent light beam orthogonal to the mean plane of the grating, the rays of the beam reach with a non-zero phase shift different sub-gratings of the device.

2. The device of claim 1, wherein the structures are structures of a support element of the grating, and are such that different sub-gratings are offset by a non-zero distance (H) along a direction orthogonal to the mean plane of the grating.

3. The device of claim 1, wherein all the sub-gratings are horizontally aligned, and wherein the grating is coated with a layer (801) comprising, on the side of its surface opposite to the grating, structures with horizontal steps such that different sub-gratings of the device are coated with portions of different thicknesses of said layer.

4. The device of any of claims 1 to 3, wherein the grating has a constant thickness (t) across its entire surface.

5. The device of any of claims 1 to 4, wherein the grating is non-periodic.

6. The device of any of claims 1 to 5, wherein the first regions (Bᵢ; Pᵢ; Aᵢ) have variable widths (Sᵢ) and spacings (aᵢ) along at least one direction (x; y) of the mean plane of the grating.

7. The device of claim 6, wherein the widths (Sᵢ) and the spacings (aᵢ) of the first regions (Bᵢ, Pᵢ, Aᵢ) and the heights (H) of said structures are selected to obtain, for a predetermined grating illumination wavelength λ_{L}, a reflection coefficient greater than 0.5 at any point of the grating, and a predetermined spatial phase-shift distribution along said at least one direction (x; y) .

8. The device of claim 7, wherein the maximum pitch of the grating is smaller than said illumination wavelength λ_{L} of the grating.

9. The device of claim 7 or 8, wherein the maximal pitch of the grating is smaller than λ_{L}/(1+sin(θᵢ)), where θᵢ is the angle of incidence under which the grating is intended to be illuminated.

10. The device of any of claims 7 to 9, wherein the widths (Sᵢ) and spacings (aᵢ) of the first regions (Bᵢ, Pᵢ, Aᵢ), and the heights (H) of said structures are selected to obtain, outside of a wavelength band having a width smaller than 250 nm including said illumination wavelength λ_{L} of the grating, a reflection coefficient smaller than 0.2 at any point of the grating.

11. The device of any of claims 1 to 10, wherein said first regions (Aᵢ; Pᵢ; Bᵢ) are:
parallel bars having a square or rectangular cross-section ; or
square pads; or
concentric rings.

12. The device of any of claims 1 to 11, wherein said grating is a monomode grating, that is, it comprises a single resonance frequency.

13. A gas detector comprising:
a light source (1101) capable of emitting a light beam in a wavelength range including a first wavelength (λₘ) corresponding to an absorption wavelength of the gas to be detected and a second wavelength (λᵣ) corresponding to a reference wavelength which is not absorbed by the gas to be detected; and
opposite the source, an assembly of first (1103) and second (1105) reflection focusing devices of any of claims 1 to 12, the first device (1103) being capable of reflecting and focusing light in a first wavelength band centered on said first wavelength (λₘ), and being substantially transparent outside of this first band, and the second device (1105) being capable of reflecting and focusing light in a second wavelength band located outside of the first band and centered on said second wavelength (λᵣ), and being substantially transparent outside of this second band.

14. The gas detector of claim 13, further comprising a first photosensitive sensor (1113) arranged to only receive the light reflected by the first device (1103), and a second photosensitive sensor (1115) arranged to only receive the light reflected by the second device (1105).
